# EUROPÄISCHE PATENTANMELDUNG

(11) **EP 3 585 073 A1**
(43) Veröffentlichungstag der Anmeldung: **25.12.2019**
(21) Anmeldenummer: 19176491.9
(22) Anmeldetag: 24.05.2019
(51) Int. Cl.: H04R 25/00, G10L 15/22, G06F 3/16, G10L 17/00, G10L 15/08

(54) **VERFAHREN ZUR STEUERUNG DER DATENÜBERTRAGUNG ZWISCHEN ZUMINDEST EINEM HÖRGERÄT UND EINEM PERIPHERIEGERÄT EINES HÖRGERÄTESYSTEMS SOWIE ZUGEHÖRIGES HÖRGERÄTESYSTEM**

(30) Priorität: 18.06.2018 DE 102018209824
(71) Anmelder: Sivantos Pte. Ltd., Singapore 539775 (SG)
(72) Erfinder: RÜCKERL, Gottfried, 90461 Nürnberg (DE); CAVALLARI, Dr. Riccardo, 91052 Erlangen (DE); MIJOVIC, Dr. Stefan, 91056 Erlangen (DE); MORALES RAMOS, Dr. Ricardo, 91054 Erlangen (DE)
(74) Vertreter: FDST Patentanwälte

(57) **Zusammenfassung**

Die Erfindung betrifft ein Verfahren zur Steuerung der Datenübertragung zwischen zumindest einem Hörgerät (3) und einem Peripheriegerät (5) eines Hörgerätesystems (1), wobei ein von dem Hörgerät (3) erfasstes Mikrofonsignal automatisch auf mindestens eine in dem Hörgerät (3) gespeicherte Schlüsselsequenz untersucht wird, und
wobei bei Erkennen zumindest einer gespeicherten Schlüsselsequenz in dem Mikrofonsignal eine dieser Schlüsselsequenz nachfolgende Audiosequenz des Mikrofonsignals von dem Hörgerät (3) auf das Peripheriegerät (5) des Hörgerätesystems (1) übertragen wird. Die Übertragungseinheit (19) überträgt dabei das Mikrofonsignal beginnend mit der Schlüsselsequenz. Weiter betrifft die Erfindung ein Hörgerätesystem (1) mit mindestens einem Hörgerät (3), das zur Durchführung des vorbeschriebenen Verfahrens eingerichtet ist.

## Beschreibung

Die Erfindung betrifft ein Verfahren zur Steuerung der Datenübertragung zwischen zumindest einem Hörgerät und einem Peripheriegerät eines Hörgerätesystems. Weiter betrifft die Erfindung ein Hörgerätesystem zur Durchführung eines solchen Verfahrens.

Ein Hörgerät dient der Versorgung einer hörgeschädigten Person mit akustischen Umgebungssignalen, die zu einer Kompensation der jeweiligen Hörschädigung entsprechend verarbeitet und insbesondere verstärkt werden. Ein Hörgerät umfasst hierzu üblicherweise einen Eingangswandler, beispielsweise in Form eines Mikrofons, eine Signalverarbeitungseinheit mit einem Verstärker, sowie einen Ausgangswandler. Der Ausgangswandler ist in der Regel als Miniaturlautsprecher realisiert und wird auch als Hörer oder Receiver bezeichnet. Er erzeugt insbesondere akustische Ausgabesignale, die zum Gehör des Patienten geleitet werden und bei diesem die gewünschte Hörwahrnehmung erzeugen.

Um den zahlreichen individuellen Bedürfnissen entgegenzukommen, werden unterschiedliche Bauformen von Hörgeräten angeboten. Bei den sogenannten BTE-Hörgeräten (Behind-The-Ear, auch Hinter-dem-Ohr bzw. HdO) wird ein Gehäuse mit Komponenten wie einer Batterie und der Signalverarbeitungseinheit hinter dem Ohr getragen. Je nach Ausgestaltung kann der Receiver entweder direkt im Gehörgang des Trägers (sogenannte Ex-Hörer-Hörgeräte oder Receiver-in-the-Canal (RIC)-Hörgeräte) angeordnet sein. Alternativ ist der Receiver innerhalb des Gehäuses selbst angeordnet, und ein flexibler, auch als Tube bezeichneter Schallschlauch leitet die akustischen Ausgabesignale des Receivers vom Gehäuse zum Gehörgang (Schlauch-Hörgeräte). Bei ITE- Hörgeräten (In-the-Ear, auch IdO bzw. In-dem-Ohr) wird ein Gehäuse, welches sämtliche funktionale Komponenten einschließlich des Mikrofons und des Receivers enthält, zumindest teilweise im Gehörgang getragen. CIC-Hörgeräte (Completely-in-Canal) sind den ITE-Hörgeräten ähnlich, werden jedoch vollständig im Gehörgang getragen.

Um eine drahtlose Kommunikation eines Hörgerätes mit einem externen Peripheriegerät wie z. B. einem Smartphone zu ermöglichen, werden mittlerweile häufig Funktechnologien (kurz: RF, z. B. Bluetooth, Bluetooth LE oder ähnliche Techniken) zur Übertragung eingesetzt. Hierbei sind keine externen Zusatzgeräte zur drahtlosen Kommunikation notwendig.

Diese Funktechnologien bieten beispielsweise die Möglichkeit, einen Audiostream (also Audiosignale) von einem Hörgerät an das Peripheriegerät zu senden. Dies kann beispielsweise zum Zweck der Nutzung einer von dem Peripheriegerät verwalteten Sprachsteuerung erfolgen. Das Peripheriegerät empfängt hierbei den Audiostream und leitet diesen an Anwendungen weiter, die den Audiostream analysieren und aus dem Sprachinhalt des Audiostreams Steueraktivitäten generieren (z. B. sprachgesteuertes Wählen, Starten und Beenden von Anwendungen oder ähnliches). Solche Anwendungen können lokal im Peripheriegerät implementiert sein oder extern, z.B. in einer über das Internet mit dem Peripheriegerät verbundenen Cloud, ablaufen.

Damit das Peripheriegerät auf akustische Signale zuverlässig reagieren kann, muss der vom Hörgerät aufgenommene Mikrofonschall permanent (ständig) über die drahtlose RF-Verbindung an das Peripheriegerät gesendet werden. Eine permanente Datenübertragung erhöht jedoch den Datenverkehr auf der drahtlosen RF-Verbindung und damit geleichermaßen den Stromverbrauch des Hörgerätes erheblich. Dies wirkt sich beispielsweise negativ auf die Batterielebensdauer des Hörgeräts (oder bei wiederaufladbaren Batterien auf die Betriebsdauer des Hörgeräts mit einer Batterieladung) aus.

Der Erfindung liegt daher die Aufgabe zugrunde, eine effiziente und energiesparende Möglichkeit zur Übertragung von aufgenommenen Schallsignalen von einem Hörgerät an ein Peripheriegerät anzugeben.

Diese Aufgabe wird erfindungsgemäß gelöst durch die Merkmale der Ansprüche 1 und 7. Vorteilhafte Ausgestaltungen der Erfindung sind in den Unteransprüchen und der nachfolgenden Beschreibung dargelegt.

Das erfindungsgemäße Verfahren wird zur Steuerung der Datenübertragung zwischen zumindest einem Hörgerät und einem Peripheriegerät eines Hörgerätesystems eingesetzt. Im Rahmen des Verfahrens wird ein von dem Hörgerät erfasstes Mikrofonsignal automatisch auf mindestens eine in dem Hörgerät gespeicherte Schlüsselsequenz untersucht. Bei Erkennen zumindest der gespeicherten Schlüsselsequenz (oder einer von gegebenenfalls mehreren gespeicherten Schlüsselsequenzen) in dem Mikrofonsignal wird eine dieser Schlüsselsequenz nachfolgende Audiosequenz des Mikrofonssignals von dem Hörgerät auf das Peripheriegerät des Hörgerätesystems übertragen.

Mit anderen Worten wird der Audiostream (also die Übertragung des Mikrofonsignals) von dem Hörgerät auf das Peripheriegerät nur dann aktiviert, wenn in dem Mikrofonsignal zumindest eine übertragungsrelevante Schlüsselsequenz erkannt wird. Erst dann wird die der Schlüsselsequenz nachfolgende Audiosequenz des Mikrofonsignals auf das Peripheriegerät übertragen. Dies begrenzt die Aktivität des Hörgerätes und reduziert den Stromverbrauch der Hörgerätekomponenten, da die Signalübertragung nur dann stattfindet, wenn dies tatsächlich erforderlich ist bzw. vom Hörgeräteträger gewünscht wird. Insbesondere erfolgen die einzelnen Verfahrensschritte automatisiert. Vorzugsweise wird das Verfahren zur Steuerung der Datenübertragung zwischen zwei Hörgeräten eines binauralen Hörgerätesystems und einem Peripheriegerät eingesetzt.

Das von dem (oder jedem) Mikrofon des Hörgerätes aufgezeichnete Mikrofonsignal ist bezüglich seiner physikalischen Natur ein Audiosignal, d.h. ein elektrisches Signal, das eine Schallinformation transportiert. Wird in dem Mikrofonsignal die hinterlegte Schlüsselsequenz (oder eine von mehreren hinterlegten Schlüsselsequenzen) erkannt, beginnt die Übertragung des Mikrofonsignals auf das Peripheriegerät. Die erkannte Schlüsselsequenz stellt somit eine Startsequenz dar, durch die der Startzeitpunkt der Signalübertragung von dem Hörgerät auf das Peripheriegerät festgelegt ist. Die übertragene Audiosequenz kann hierbei die volle Informationstiefe des Mikrofonsignals enthalten, also alle in dem Mikrofonsignal in dem Übertragungszeitraum enthaltenen akustischen Informationen (z.B. situationsbezogene Umgebungsgeräusche, Musik, Sprache). In diesem Fall wird das Mikrofonsignal also ungefiltert oder unbearbeitet von dem Hörgerät auf das Peripheriegerät übertragen. Alternativ hierzu kann die übertragene Audiosequenz das Mikrofonsignal aber auch in gefilterter oder vorverarbeiteter Form enthalten. Beispielsweise enthält die übertragene Audiosequenz gegenüber dem ursprünglichen Mikrofonsignal einen geringeren Rauschanteil oder eine reduzierte Spektralbreite.

Bei der von dem Hörgerät auf das Peripheriegerät übertragenen Audiosequenz des Mikrofonsignals handelt es sich insbesondere um einen Sprachstrom, d.h. um ein Audiosignal (bzw. ein Teil eines solchen), welches separierbare gesprochene Sprache beinhaltet. Von einem solchen Sprachstrom zu unterscheiden sind Audiosignale oder Abschnitte von Audiosignalen, die nur nicht-sprachliche Geräusche (beispielsweise Musik, Verkehrslärm, Rauschen) und/oder nicht separierbare Sprachanteile (beispielsweise Stimmgewirr in Menschenansammlungen wie z.B. auf einer Cocktailparty) enthalten. Mit anderen Worten charakterisiert der Begriff "Sprachstrom" eine Unterart der akustischen Information, die in dem Mikrofonsignal transportiert wird.

Eine Schlüsselsequenz im Sinne der Erfindung ist ein Abschnitt des Mikrofonsignals, dessen akustische Information eine bestimmte (insbesondere eine Aktion auslösende oder anfordernde) Bedeutung transportiert. Eine Schlüsselsequenz kann "klassische" Sprachsignale wie Worte oder Wortfolgen oder auch einzelne Töne oder Tonfolgen wie beispielsweise Signaltöne oder Melodien beinhalten. Grundsätzlich ist auch eine Kombination aus sprachlicher und nichtsprachlicher Information (z. B. ein in einer bestimmten Tonhöhe oder Tonfolge gesungenes Wort) als Schlüsselsequenz denkbar.

Erfindungsgemäß wird zusätzlich zu der auf die Schlüsselsequenz folgenden Audiosequenz des Mikrofonsignals auch die Schlüsselsequenz selbst (genauer gesagt der der Schlüsselsequenz entsprechende Abschnitt des ungefilterten oder gefilterten Mikrofonsignals) an das Peripheriegerät übertragen. Das Mikrofonsignal wird mit anderen Worten beginnend mit der Schlüsselsequenz von dem Hörgerät auf das Peripheriegerät übertragen. Die der Schlüsselsequenz nachfolgende Audiosequenz wird hierbei insbesondere zeitverzögert im Anschluss an die Schlüsselsequenz übertragen.

Als Peripheriegerät sind grundsätzlich alle Geräte einsetzbar, die zur Datenübertragung mit einem Hörgerät koppelbar sind. Insbesondere werden Bluetoothfähige Peripheriegeräte eingesetzt. Besonders bevorzugt wird als Peripheriegerät ein Smartphone als Teil des Hörgerätesystems eingesetzt.

Vorteilhafterweise wird der Audiostream von dem Hörgerät auf das Peripheriegerät des Hörgerätesystems dann veranlasst, wenn die zumindest eine erkannte Schlüsselsequenz mit einer Schlüsselsequenz übereinstimmt, die von einer audiosignalverarbeitenden Funktion des Peripheriegerätes benutzt wird. Mit anderen Worten wird die Datenübertragung zwischen dem Hörgerät und dem Peripheriegerät nur dann aktiviert, wenn eine Übereinstimmung zwischen der zumindest einen in dem Mikrofonsignal erkannten Schlüsselsequenz und einer auf dem Peripheriegerät hinterlegten Schlüsselsequenz festgestellt wurde. Insbesondere bevorzugt wird das Mikrofonsignal vom Hörgerät auf das Peripheriegerät übertragen, wenn zumindest eine der auf in dem Hörgerät gespeicherte Schlüsselsequenzen mit einer Schlüsselsequenz übereinstimmt, die auch von einer sprachverarbeitenden Funktion des Peripheriegerätes benutzt wird.

Dies wird beispielhaft anhand eines Hörgerätesystems erläutert, welches ein Hörgerät und ein mit diesem gekoppeltes Smartphone mit einem Android-Betriebssystem umfasst. In diesem Fall kann die Signalverarbeitungseinheit des Hörgeräts beispielsweise nach den Schlüsselworten (Schlüsselsequenz) "OK Google" im Mikrofonsignal suchen. Da das Smartphone beispielsweise zum Starten von auf diesem installierten Apps oder zum Aufrufen von Websites die gleiche Schlüsselsequenz - also ebenfalls die Wortfolge "OK Google" - benötigt, wird vorzugsweise ein ausreichend langer Teil des in dem Mikrofonsignal erkannten Audiosignals (z. B. bis zu 3 Sekunden) durch das Hörgerät aufgezeichnet. Bei Erkennung der Schlüsselsequenz "OK Google" in dem aufgezeichneten Audiosignal aktiviert das Hörgerät die Verbindung zu dem Smartphone und streamt das Mikrofonsignal (bei dem es sich um einen Sprachstrom oder z.B. auch ein Musikstück handeln kann) auf das Smartphone. Die aufgenommene Schlüsselsequenz, also die im Mikrofonsignal enthaltenen Worte "OK Google", werden dabei zusammen mit der nachfolgenden Audiosequenz des Mikrofonsignals auf das Smartphone übermittelt, so dass durch diese Schlüsselsequenz auch das auf dem Smartphone laufende Spracherkennungsprogramm aktiviert wird.

Die Schlüsselsequenz ist insbesondere eine hörgeräte-externe Schlüsselsequenz (also eine Schlüsselsequenz, die für die Funktion des Hörgeräts selbst ansonsten keine Bedeutung hat). Bei der Schlüsselsequenz handelt es sich insbesondere um einen bestimmten Ton oder eine bestimmte Tonfolge (beispielsweise ein Jingle) oder aber ein bestimmtes Kennwort (Schlüsselwort) zur Aktivierung von Diensten oder Anwendungen auf dem jeweiligen Peripheriegerät (beispielsweise "OK Google").

In vorteilhafter Ausführung wird das Mikrofonsignal im Hörgerät zwischengespeichert, insbesondere um eine zeitverzögerte Übertragung auf das Peripheriegerät zu ermöglichen. Vorzugsweise wird dabei im Betrieb des Hörgeräts ständig ein gleitender Abschnitt des aufgenommenen Mikrofonsignals, z.B. die letzten 3, 5 oder 10 Sekunden des Mikrofonsignals, zwischengespeichert. Bei Erkennung der Schlüsselsequenz in dem aktuellen Mikrofonsignal wird dabei vorzugsweise anstelle des aktuellen Mikrofonsignals das zwischengespeicherte Mikrofonsignal mit fester oder einstellbarer Zeitverzögerung an das Peripheriegerät übermittelt.

Bevorzugt werden die zumindest eine erkannte Schlüsselsequenz und die nachfolgende Audiosequenz des Mikrofonsignals drahtlos vom Hörgerät auf das Peripheriegerät übertragen. Insbesondere werden die zumindest eine erkannte Schlüsselsequenz und die nachfolgende Audiosequenz des Mikrofonsignals mittels eines strom-effizienten RF-Übertragungssystems übertragen. Insbesondere bevorzugt ist die Übertragung mittels Bluetooth LE (BLE), welches im Vergleich zum "klassischen" Bluetooth einen geringeren Stromverbrauch hat.

Vorzugsweise wird die Übertragung des Mikrofonsignals von dem Hörgerät auf das Peripheriegerät von einer Eigenstimmerkennung ("Own Voice Detection") abhängig gemacht. Das Mikrofonsignal wird bei Erkennung der Schlüsselsequenz somit nur dann übertragen, wenn die Schlüsselsequenz als eine mit der eigenen Stimme eines Trägers des Hörgeräts gesprochene Sequenz verifiziert wurde. Bei der Schlüsselsequenz handelt es sich dabei vorzugsweise um einen Sprachbefehl (grundsätzlich könnten im Rahmen dieser Ausführungsvariante aber auch ein oder mehrere von dem Hörgeräteträger gesungene oder gesummte Töne als Schlüsselsequenz verifiziert werden). Andere Audiosignale wie beispielsweise Sprachsignale von Gesprächspartnern oder von einem im Hintergrund laufenden Radio, die vom Mikrofon des Hörgerätes aufgezeichnet werden, initiieren bei dieser Ausführungsform dagegen keine Audioübertragung auf das Peripheriegerät.

Weiter bevorzugt wird die Übertragung des Mikrofonsignals von dem Hörgerät auf das Peripheriegerät dann beendet, wenn in dem Mikrofonsignal eine hinterlegte Abbruchsequenz erkannt wird. Die Erkennung der Abbruchssequenz in dem Mikrofonsignal erfolgt dabei analog zu (und vorzugsweise mit den gleichen Mitteln) wie die Erkennung der oder jeder die Übertragung auslösenden Schlüsselsequenz. Bei einer hörgeräte-internen Abbruchsequenz kann beispielsweise die Wortfolge "Stop, SIGNIA" zu einem Abbruch der Datenübertragung führen. Bei hörgeräte-externen Abbruchsequenzen kann dies beispielsweise durch den Sprachbefehl "Stop, Google" erreicht werden. Ebenfalls bevorzugt wird die Übertragung des Mikrofonsignals vom Hörgerät auf das Peripheriegerät dann beendet, wenn zumindest eine der im Hörgerät gespeicherten Abbruchsequenzen in dem Mikrofonsignal als mit der eigenen Stimme eines Trägers des Hörgeräts gesprochen verifiziert wurde. In diesem Falle kann nur der Hörgeräteträger selbst die Datenübertragung stoppen. Alternativ hierzu ist vorgesehen, dass die Datenübertragung automatisch durch das Hörgerät gestoppt wird, wenn der Hörgeräteträger für eine bestimmte Zeitspanne sprachlich inaktiv ist, d.h. nicht spricht.

Das erfindungsgemäße Hörgerätesystem umfasst zumindest ein Hörgerät, welches wiederum folgende Komponenten aufweist:
- zumindest ein Mikrofon zur Aufnahme eines Mikrofonsignals,
- eine Signalverarbeitungseinheit (insbesondere in Form eines digitalen Signalprozessors, kurz DSP) zur Untersuchung des Mikrofonsignals auf zumindest eine in dem oder jedem Hörgerät gespeicherte Schlüsselsequenz sowie
- eine Übertragungseinheit, die bei Erkennen der gespeicherten Schlüsselsequenz in dem Mikrofonsignal zur Übertragung einer der Schlüsselsequenz nachfolgenden Audiosequenz des Mikrofonsignals von dem Hörgerät auf ein Peripheriegerät eingerichtet ist.

Die Übertragungseinheit überträgt hierbei zusätzlich auch die in dem Mikrofonsignal erkannte Schlüsselsequenz. Die Übertragungseinheit ist also dazu eingerichtet, das Mikrofonsignal beginnend mit der Schlüsselsequenz von dem Hörgerät auf das Peripheriegerät zu übertragen.

Das erfindungsgemäße Hörgerätesystem ist somit allgemein zur Durchführung des vorbeschriebenen Verfahrens eingerichtet. Die vorstehend beschriebene Übertragung des Mikrofonsignals von dem oder jedem Hörgerät auf das Peripheriegerät erfolgt hierbei nur dann, wenn mittels der Signalverarbeitungseinheit die Schlüsselsequenz (oder eine von mehreren hinterlegten Schlüsselsequenzen) in dem Mikrofonsignal erkannt wurde. Die vorstehend beschriebenen Ausführungsformen des erfindungsgemäßen Verfahrens korrespondieren jeweils mit entsprechenden Ausführungsformen des erfindungsgemäßen Hörgerätesystems.

Insbesondere umfasst das Hörgerätesystem zwei Hörgeräte, die zur Versorgung der beiden Ohren des Hörgeräteträgers eingerichtet sind. Es handelt sich in diesem Fall um ein binaurales Hörgerätesystem. Die beiden Hörgeräte des Hörgerätesystems sind hierbei zweckmäßigerweise über einen magnetischen Link gekoppelt, wobei die der Eigenstimmerkennung zugrundeliegenden Algorithmen (OVD-Algorithmen) auf beiden Hörgeräten über diesen Link Daten austauschen.

Die Signalverarbeitungseinheit des Hörgerätes umfasst vorzugsweise ein Audiosignalerkennungsmodul, welches das Mikrofonsignal permanent analysiert und hieraus mindestens eine im Hörgerät hinterlegte Schlüsselsequenz erkennt. Das Audiosignalerkennungsmodul umfasst vorzugsweise mindestens einen Algorithmus zur Erkennung von Tönen und/oder Tonfolgen. Zusätzlich oder alternativ hierzu umfasst das Audiosignalerkennungsmodul vorzugsweise mindestens einen Algorithmus zur Spracherkennung.

Vorzugsweise ist das zumindest eine Hörgerät zur drahtlosen Übertragung der zumindest einen erkannten Schlüsselsequenz und der nachfolgenden Audiosequenz des Mikrofonsignals von dem jeweiligen Hörgerät auf das Peripheriegerät eingerichtet. Das zumindest eine Hörgerät umfasst zweckmäßigerweise eine RF-Übertragungselektronik inklusive RF-Antenne.

Nachfolgend werden Ausführungsbeispiele der Erfindung anhand einer Zeichnung näher erläutert. Dabei zeigen:
- Fig. 1: in schematischer Darstellung ein Hörgerätesystem mit einem Hörgerät und einem Smartphone als Peripheriegerät, sowie
- Fig. 2: in schematischer Darstellung den Verfahrensablauf zur Datenübertragung zwischen einem Hörgerät und einem Peripheriegerät.

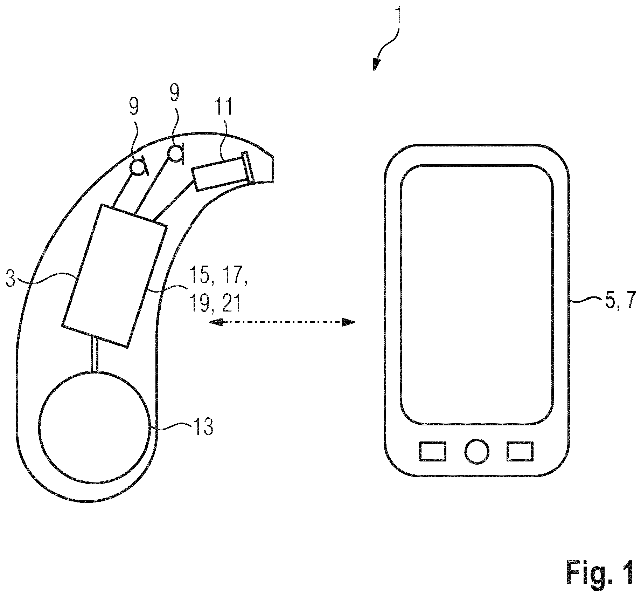

In Fig. 1 ist in schematischer Darstellung ein Hörgerätesystem 1 mit einem Hörgerät 3 und einem als Smartphone 5 ausgebildeten Peripheriegerät 7 gezeigt. Das Hörgerät 3 umfasst zwei Mikrofone 9, einen Hörer bzw. Receiver 11 und eine Batterie 13. Weiter umfasst das Hörgerät 3 eine Signalverarbeitungseinheit 15 in Form eines digitalen Signalprozessors (DSP) mit einer Audioerkennungseinheit 17 und einer Übertragungseinheit 19. Bei der Signalverarbeitungseinheit 15 handelt es sich vorzugsweise um ein Hardware-Bauteil mit nicht-programmierbaren integrierten Schaltkreisen (insbesondere um einen ASIC). In diesem Fall sind die Audioerkennungseinheit 17 und/oder die Übertragungseinheit 19 vorzugsweise in Form von nicht-programmierbaren Schaltkreisen implementiert. Alternativ hierzu ist die Signalverarbeitungseinheit 15 durch einen programmierbaren Prozessor gebildet oder umfasst zumindest einen solchen. In diesem Fall können die Audioerkennungseinheit 17 und/oder die Übertragungseinheit 19 auch als Software-Module ausgebildet sein. Das Hörgerät 3 ist über eine stromsparende RF-Übertragungstechnik mit dem Smartphone 5 gekoppelt, so dass zwischen beiden Komponenten des Hörgerätesystems 1 eine Datenübertragung erfolgen kann. Die von dem Hörgerät 3 auf das Smartphone 5 übertragenen Daten umfassen dabei Audiosignale, nämlich Sequenzen des von dem Hörgerät 3 aufgenommenen Mikrofonsignals.

Diese Datenübertragung zwischen dem Hörgerät 3 und dem Smartphone 5 wird erst dann initiiert, wenn in dem von dem Hörgerät 3 aufgenommenen Mikrofonsignal eine von mehrere Schlüsselsequenzen identifiziert werden, die im Hörgerät 3 hinterlegt sind. Unter die Begrifflichkeit der Schlüsselsequenz fallen hierbei im Rahmen der Erfindung einerseits Töne oder Tonfolgen und andererseits Schlüsselwörter oder Schlüsselwortfolgen.

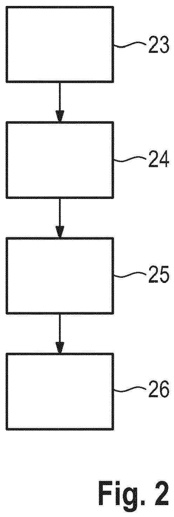

Der detaillierte Verfahrensablauf der vorstehend beschriebenen Datenübertragung zwischen dem Hörgerät 3 und dem Smartphone 5 ist in Fig. 2 gezeigt. Hier wird Bezug auf das vorbeschriebene Hörgerätesystem 1 gemäß Fig. 1 genommen. Allerdings können jedoch auch anders ausgebildete Hörgeräte und/oder Peripheriegeräte zur Datenübertragung nach dem nachstehend beschriebenen Verfahren eingesetzt werden.

Im Zuge des Verfahrens wird ein Mikrofonsignal von den Mikrofonen 9 des Hörgerätes 3 erfasst (Schritt 23). Jeweils die letzten drei Sekunden des Mikrofonsignals werden dabei ständig in einem Speicher des Hörgerätes 3 zwischengespeichert. Das erfasste Mikrofonsignal wird mittels der Audioerkennungseinheit 17 kontinuierlich analysiert und auf im Hörgerät 3 gespeicherte Schlüsselsequenzen untersucht (Schritt 24). Als Schlüsselsequenz wird vorliegend z. B. die Wortfolge "OK Google" (als hörgeräte-externes Schlüsselwort) gesucht, die in dem Hörgerät 3 hinterlegt ist. Hierzu umfasst die Audioerkennungseinheit 17 ein Spracherkennungsmodul 21.

Wird die Wortfolge "OK Google" als Bestandteil des Mikrofonsignals erkannt, so wird eine dieser Wortfolge (also der Schlüsselsequenz) nachfolgende Audiosequenz des Mikrofonsignals mittels der Übertragungseinheit 19 des Hörgerätes 3 von diesem auf das Smartphone 5 übertragen (Schritt 25). Anstelle des aktuellen Mikrofonsignals wird dabei das zwischengespeicherte Mikrofonsignal mit einer Zeitverzögerung von z.B. 3 Sekunden übertragen. Durch die zeitverzögerte Übertragung wird auf einfache Weise erreicht, dass die erkannte Schlüsselsequenz (genauer gesagt ein der Schlüsselsequenz entsprechender Abschnitt des Mikrofonsignals) mitgesendet wird, wenn die Übertragung zum Zeitpunkt der Erkennung der Schlüsselsequenz gestartet wird. Die an das Smartphone 5 übertragenen Audiosignale umfassen in dem obigen Beispiel also die in dem Mikrofonsignal enthaltenen, gesprochenen Worte "OK Google", die die Übertragung ausgelöst haben.

In einer bevorzugten Ausführungsvariante des Hörgeräts 3 wird das Mikrofonsignal von dem Hörgerät 3 auf das Smartphone 5 nur dann übertragen, wenn die in dem Mikrofonsignal erkannte Wortfolge (Schlüsselsequenz) als mit der eigenen Stimme eines Trägers des Hörgeräts 3 gesprochen verifiziert wurde ("Own Voice Detection"). Ebenfalls ist es möglich, dass der Sprachstrom nur dann übertragen wird, wenn auf dem Smartphone 5 ebenfalls die Wortfolge "OK Google" von einer audiosignalverarbeitenden Funktion des Peripheriegerätes 5 benutzt wird und somit die Schlüsselsequenzen übereinstimmen.

Die übertragende Audiosequenz (also die Übertragung des Mikrofonsignals von dem Hörgerät 3 auf das Peripheriegerät 3) wird dann beendet, wenn durch das Hörgerät 3 eine Abbruchsequenz im Mikrofonsignal erkannt wird (Schritt 26). Als Abbruchsequenz ist beispielsweise die Wortfolge "Stop Google" hinterlegt. Auch hier kann zusätzlich die Eigenstimmerkennung und/oder eine Überprüfung zwischen einer übereinstimmenden Wortfolge auf dem Smartphone 5 und dem Hörgerät 3 genutzt werden.

In einer nicht explizit dargestellten weiteren Ausführungsform umfasst das Hörgerätesystem 1 zwei Hörgeräte 3. Hierbei handelt es sich um ein binaurales Hörgerätesystem 1, bei dem die beiden Hörgeräte 3 der Versorgung des rechten und linken Ohrs des Hörgeräteträgers dienen und über einen magnetischen Link miteinander gekoppelt sind. Die der Eigenstimmerkennung zugrundeliegenden Algorithmen (OVD-Algorithmen) werden durch beide Hörgeräte 3 genutzt. Die OVD-Algorithmen der beiden Hörgeräte 3 tauschen hierbei über den magnetischen Link erkennungsrelevante Daten aus und verbessern durch geeignete Verarbeitung dieser Daten die Sicherheit der Eigenstimmerkennung. Die zum Hörgerätesystem 1 mit einem Hörgerät 3 erfolgten Ausführungen lassen sich hierbei sinngemäß auf das binaurale Hörgerätesystem 1 übertragen.

Die Erfindung wird an den vorstehend beschriebenen Ausführungsbeispielen besonders deutlich, ist auf diese Ausführungsbeispiele gleichwohl aber nicht beschränkt. Vielmehr können weitere Ausführungsformen der Erfindung aus den Ansprüchen und der vorstehenden Beschreibung abgeleitet werden.

### Bezugszeichenliste

- 1: Hörgerätesystem
- 3: Hörgerät
- 5: Peripheriegerät
- 7: Smartphone
- 9: Mikrofon
- 11: Receiver
- 13: Batterie
- 15: Signalverarbeitungseinheit
- 17: Audiosignalerkennungseinheit
- 19: Übertragungseinheit
- 21: Stimmerkennungsmodul
- 23: Verfahrensschritt 1
- 24: Verfahrensschritt 2
- 25: Verfahrensschritt 3
- 26: Verfahrensschritt 4

## Patentansprüche

1. Verfahren zur Steuerung der Datenübertragung zwischen zumindest einem Hörgerät (3) und einem Peripheriegerät (5) eines Hörgerätesystems (1),
- wobei ein von dem Hörgerät (3) erfasstes Mikrofonsignal automatisch auf in dem Hörgerät (3) gespeicherte Schlüsselsequenzen untersucht wird, und
- wobei bei Erkennen zumindest einer gespeicherten Schlüsselsequenz in dem Mikrofonsignal eine dieser Schlüsselsequenz nachfolgende Audiosequenz des Mikrofonsignals von dem Hörgerät (3) auf das Peripheriegerät (5) des Hörgerätesystems (1) übertragen wird, wobei das Mikrofonsignal beginnend mit der Schlüsselsequenz von dem zumindest einen Hörgerät (3) auf das Peripheriegerät (5) übertragen wird.

2. Verfahren nach Anspruch 1,
wobei das Mikrofonsignal von dem Hörgerät (3) auf das Peripheriegerät (5) nur dann übertragen wird, wenn die zumindest eine erkannte Schlüsselsequenz mit einer Schlüsselsequenz übereinstimmt, die von einer audiosignalverarbeitenden Funktion des Peripheriegerätes (5) benutzt wird.

3. Verfahren nach einem der vorhergehenden Ansprüche,
wobei das Mikrofonsignal im Hörgerätesystem (1) zwischengespeichert wird.

4. Verfahren nach einem der vorhergehenden Ansprüche,
wobei das Mikrofonsignal drahtlos vom Hörgerät (3) auf das Peripheriegerät (5) übertragen wird.

5. Verfahren nach einem der vorhergehenden Ansprüche,
wobei das Mikrofonsignal von dem Hörgerät (3) auf das Peripheriegerät (5) nur dann übertragen wird, wenn die zumindest eine erkannte Schlüsselsequenz als eine mit der eigenen Stimme eines Trägers des Hörgeräts (3) gesprochene Sequenz verifiziert wurde.

6. Verfahren nach einem der vorhergehenden Ansprüche,
wobei die Übertragung des Mikrofonsignals von dem Hörgerät (3) auf das Peripheriegerät (5) dann beendet wird, wenn in dem Mikrofonsignal eine Abbruchsequenz erkannt wird.

7. Hörgerätesystem (1) mit zumindest einem Hörgerät (3), das zumindest eine Hörgerät (3) umfassend:
- zumindest ein Mikrofon (9) zur Aufnahme eines Mikrofonsignals,
- eine Signalverarbeitungseinheit (15) zur Untersuchung des Mikrofonsignals auf zumindest eine im Hörgerät (3) gespeicherte Schlüsselsequenz, sowie
- eine Übertragungseinheit (19), die bei Erkennen zumindest einer gespeicherten Schlüsselsequenz in dem Mikrofonsignal zur Übertragung einer der Schlüsselsequenz nachfolgenden Audiosequenz des Mikrofonsignals von dem Hörgerät (3) auf ein Peripheriegerät (7) eingerichtet ist,
wobei die Übertragungseinheit (19) dazu eingerichtet ist, das Mikrofonsignal beginnend mit der Schlüsselsequenz von dem zumindest einen Hörgerät (3) auf das Peripheriegerät (5) zu übertragen.

8. Hörgerätesystem (1) nach Anspruch 7,
wobei die Übertragungseinheit (19) dazu eingerichtet ist, das Mikrofonsignal von dem Hörgerät (3) auf das Peripheriegerät (5) nur dann zu übertragen, wenn die zumindest eine erkannte Schlüsselsequenz mit einer Schlüsselsequenz übereinstimmt, die von einer audiosignalverarbeitenden Funktion des Peripheriegerätes (5) benutzt wird.

9. Hörgerätesystem (1) nach Anspruch 7 oder 8,
wobei das mindestens eine Hörgerät (3) zur Zwischenspeicherung des Audiosignals eingerichtet ist.

10. Hörgerätesystem (1) nach einem der Ansprüche 7 bis 9,
wobei das zumindest eine Hörgerät (3) zur drahtlosen Übertragung des Mikrofonsignals von dem jeweiligen Hörgerät (3) auf das Peripheriegerät (5) eingerichtet ist.

11. Hörgerätesystem (1) nach einem der Ansprüche 7 bis 10,
wobei die Übertragungseinheit (19) dazu eingerichtet ist, das Mikrofonsignal nur dann von dem Hörgerät (3) auf das Peripheriegerät (5) zu übertragen, wenn die zumindest eine erkannte Schlüsselsequenz als eine mit der eigenen Stimme eines Trägers des Hörgeräts (3) gesprochene Sequenz verifiziert wurde.

12. Hörgerätesystem (1) nach einem der Ansprüche 7 bis 11,
wobei die Übertragungseinheit (19) dazu eingerichtet ist, die Übertragung des Mikrofonsignals von dem Hörgerät (3) auf das Peripheriegerät (5) bei Erkennung zumindest einer in dem Mikrofonsignal enthaltenen Abbruchsequenz zu beenden.
